# EUROPÄISCHE PATENTSCHRIFT

(11) **EP 0 935 880 B1**
(45) Veröffentlichungstag und Bekanntmachung des Hinweises auf die Patenterteilung: **13.02.2002**
(21) Anmeldenummer: 97949863.1
(22) Anmeldetag: 30.10.1997
(51) Int. Cl.: H04N 3/15

(54) **SCHALTUNGSANORDNUNG SOWIE VERFAHREN ZUM SCHNELLEN AUSLESEN EINER BILDZELLE**
CIRCUIT AND METHOD FOR RAPID READING OF AN IMAGE CELL
CIRCUIT ET PROCEDE DE LECTURE RAPIDE D'UNE CELLULE VIDEO

(30) Priorität: 31.10.1996 DE 19644096
(43) Veröffentlichungstag der Anmeldung: 18.08.1999
(73) Patentinhaber: INSTITUT FÜR MIKROELEKTRONIK STUTTGART, 70569 Stuttgart (DE)
(72) Erfinder: SEGER, Ulrich, D-71106 Magstadt (DE); APEL, Uwe, D-72666 Neckartailfingen (DE); HÖFFLINGER, Bernd, D-70569 Stuttgart (DE); GRAF, Heinz-Gerd, D-71106 Magstadt (DE)
(74) Vertreter: Münich, Wilhelm, Dr.
(86) Internationale Anmeldenummer: DE9702529
(87) Internationale Veröffentlichungsnummer: WO9819453

(56) Entgegenhaltungen:
- EP-A- 0 717 556
- DE-A- 4 209 536

## Beschreibung

### Technisches Gebiet

Die Erfindung bezieht sich auf eine Schaltungsanordnung sowie ein Verfahren zum schnellen Auslesen einer Bildzelle für einen Bildaufnehmer-Chip mit einer Vielzahl derartiger in Form eines zweidimensionalen Arrays angeordneter Bildzellen und mit einer Ausleselogik, die zur Abbildung einer hohen Eingangssignaldynamik auf eine reduzierte Ausgangssignaldynamik ausgelegt ist.

### Stand der Technik

Eine Bildzelle der vorstehend genannten Art ist in der DE 42 09 536 beschrieben und vermag eine hohe Eingangssignaldynamik in den zu detektierenden Lichtsignalen mit einer zuverlässig festgelegten, vorzugsweise logarithmischen Kennlinie auf eine Ausgangssignaldynamik abzubilden.
Hierbei weist die Bildzelle wenigstens zwei MOS-Transistoren auf, die derart mit dem lichtempfindlichen Element verbunden sind, daß das lichtempfindliche Element mit der einen Hauptelektrode eines ersten MOS-Transistors und mit dem Gate eines zweiten MOS-Transistors verbunden ist, sowie das Gate und die andere Hauptelektrode des ersten MOS-Transistors kurzgeschlossen sind und auf ein festes Potential gelegt sind, so daß sich eine logarithmische Kennlinie ergibt und wobei an der zweiten Hauptelektrode des zweiten MOS-Transistors ein Ausgangssignalverstärker mit hoher Eingangsimpedanz angeschlossen ist.

Bei Sensorzellen, wie sie in der vorstehenden Druckschrift beschrieben sind, kommt es jedoch unter bestimmten Betriebsbedingungen, d.h. bei einer schnellen Signalmodulation des aufgenommenen Bildfelds auf geringem Anregungspegel, zu einer reduzierten Signalmodulationsfähigkeit. Ursache ist der beleuchtungsabhängige Innenwiderstand des logarithmierenden Transistors und die damit betriebszustandabhangige Bandbreite des internen Übertragungsverhaltens. Folge hiervon sind insbesondere in dunklen Szenen mit bewegten hellen Bildpunkten auftretende Nachziehspuren, die nachteilig zur Wirkung kommen.

### Darstellung der Erfindung

Der Erfindung liegt die Aufgabe zugrunde, eine Schaltungsanordnung sowie ein Verfahren zum schnellen Auslesen einer Bildzelle für einen Bildaufnehmer-Chip mit einer Vielzahl derartiger in Form eines zweidimensionalen Arrays angeordneter Bildzellen und mit einer Ausleselogik, die zur Abbildung einer hohen Eingangssignaldynamik auf eine reduzierte Ausgangssignaldynamik ausgelegt ist, derart anzugeben, daß der vorstehend beschriebene Nachzieh-Effekt bei dunklen Aufnahmeszenen nicht auftritt. Insbesondere soll dafür Sorge getragen werden, daß die in der DE 42 09 536 beschriebenen Bildzellen möglichst rasch ausgelesen werden können, so daß die Bildzellen unmittelbar nach jedem Belichtungsvorgang ausgelesen werden und in einen Zustand zurückversetzt werden, in dem sie für einen erneuten Belichtungsvorgang bereit stehen.

Die Lösung der Erfindung ist in den Ansprüchen 1 und 6 angegeben. Den Erfindungsgedanken ausgestaltende Merkmale sind Gegenstand der Unteransprüche. Die erfindungsgemäße Schaltungsanordnung zum schnellen Auslesen einer Bildzelle für einen Bildaufnehmer-Chip, die in der DE 42 09 536 beschrieben ist, ist derart ausgebildet, daß ein zum ersten MOS-Transistor, dem sogenannten LogarithmierTransistor parallel geschalteter weiterer MOS-Transistor des gleichen Ladungsträgertyps geschaltet ist, dessen eine Hauptelektrode mit der einen Hauptelektrode des ersten MOS-Transistors und dessen andere Hauptelektrode mit der anderen Hauptelektrode des ersten MOS-Transistors kurzgeschlossen sind, und daß an die Gate-Elektrode des weiteren MOS-Transistors ein Reset-Spannungspuls anlegbar ist.

Erfindungsgemäß wird die Schaltung zum schnellen Auslesen derart betrieben, daß zeitlich nach dem Auslesevorgang eine Resetphase folgt, in der an das Gate des weiteren MOS-Transistors (Mr1) ein Reset-Spannungspuls angelegt wird, der außerhalb der Versorgungsspannung des Transistors liegt und die Einstellung eines Arbeitspunktes außerhalb des weak-inversion-Bereiches bewirkt, der eine hinreichend schnelle Entladung des internen Knotens phi_def - dieser entspricht der ersten Hauptelektrode des ersten MOS-Transistors (MO) - sicherstellt. Das Potential auf dem internen Knoten der Bildzelle kann so innerhalb der Reset-Phase auf einen Wert eingestellt werden, der einer minimalen Bestrahlungsstärke entspricht. Die Zelle steht damit für eine erneute Belichtung zur Verfügung.

### Kurze Beschreibung der Zeichnung

Die Erfindung wird nachstehend ohne Beschränkung des allgemeinen Erfindungsgedankens anhand eines Ausführungsbeispiels unter Bezugnahme auf die Zeichnung exemplarisch beschrieben: Es zeigt:

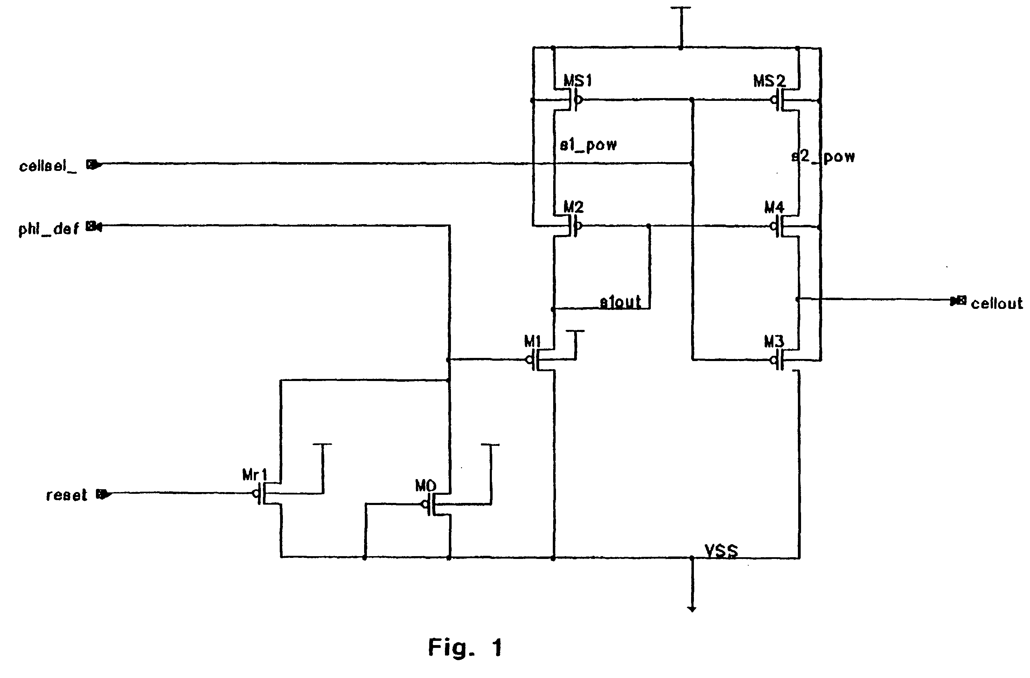

- Fig. 1: Schaltungsanordnung zum schnellen Auslesen einer Bildzelle.

### Darstellung von Ausführunosbeispielen

In Figur 1 ist ein lichtempfindlicher Bildpunkt einer Bildzelle dargestellt, dessen lichtempfindliches Element mit der einen Hauptelektrode eines ersten MOS-Transistors M0 und mit dem Gate eines zweiten MOS-Transistors M1 verbunden ist. Das lichtempfindliche Element wird in der Schaltungsanordnung durch den elektrischen Eingang phi-def definiert, an dem der einfallende Photonenstrom anliegt.

Parallel zu dem, den Sensorknoten bildenden MOS-Transistor M0, der durch seine Verschaltung als Logarithmierer arbeitet, ist ein MOS-Transistor *Mr1* des gleichen Ladungsträgertyps geschaltet. Dieser beeinflußt bei richtiger Dimensionierung das Verhalten des eigentlichen Logarithmieres *M0* nicht, solange er gesperrt bleibt. In einer dem Auslesevorgang folgenden Reset-Phase wird der Transistors *Mr1* mit einem Gate-Spannungspuls mit einem bestimmten Wert außerhalb der Versorgungsspannung, (für Sensorzellen auf p-Kanal-Transistoren unterhalb eines Versorgungspotentials Vₛₛ, für n-Kanal-Typen oberhalb eines Versorgungspotentials V_{DD}) angesteuert, der einen Arbeitspunkt außerhalb des Weak-Inversion-Bereichs gewährleistet. Die im Vergleich zum Logarithmiertransistor damit erreichbare deutlich höhere Leitfähigkeit gewährleistet ein schnelles Einschwingen, bspw. kürzer als ein Zeilenauslesezyklus, des internen Sensorknotens auf ein Potential, das einem schwachbis nicht beleuchteten Zustand entspricht

Der tatsächliche Pegel, auf den sich der Sensorknoten einstellt, wird durch die Pulshöhe des Rücksetzsignals (reset) mit bestimmt, da auch der Rücksetztransistor Mr1 nach einem Teil des Entladevorgangs in des weak-inversion-Bereich eintritt. Der unterste Grauwert, auf den sich das Sensorbild nach einer Auslesung unmittelbar zurückstellen läßt, wird daher durch den Rücksetzpegel einstellbar.

Die außerhalb des regulären Versorgungsspannungsbereichs liegenden Rücksetzpegel (reset) werden über geschaltete Kapazitäten direkt in der Schaltungsgruppe des Zeilendekoder erzeugt. Die Pegellage kann durch einen innerhalb des Versorgungsspannungsbereichs liegenden Referenzpegel, der mit der Gegenelektrode der getakteten Kapazität verbunden wird, von außen bestimmt werden. Die zeitliche Kopplung des Rücksetzvorgangs mit dem Auslesen einer weiteren Zeile wird in der Zeilendekoderschaltung implementiert.

Die in Figur 1 dargestellten Transistoren sind beispielsweise als p-enhanced Transistoren ausgebildet. Das lichtempfindliche Element bildet so die Sourceelektrode des erste MOS-Transistors M0, die mit dem Gate des zweiten MOS-Transistors M1 verbunden ist, der als Sourcefolger geschaltet ist. Die Drainelektrode des ersten MOS-Transistors M0 ist mit einem Pol Vₛₛ der Versorgungsspannung verbunden. Der Sourcefolger M1 dient zur Impedanzwandlung und wird hinsichtlich eines guten Hochfrequenzverhaltens unmittelbar neben dem Sensorelement, bei dem gezeigten Ausführungsbeispiel also dem Transistor M0 integriert. Der Transistor M2 dient lediglich als Last für den Betrieb des Transistors M0 und ist als Sourcefolger geschaltet.

Ein weiterer, ebenfalls als Sourcefolger geschalteter MOS-Transistor M4 stellt eine zweite Verstärkerstufe dar, wobei der Transistor M3 die nachgeschaltete Last hierfür bildet. Die Transistoren MS1 und MS2 dienen als Schalter für das Abschalten der beiden Zweige des zweistufigen Bildpunktverstärkers bei jeweils den nicht adressierten Zeilen, um den Leistungsbedarf des gesamten Sensors, der sich aus einer Vielzahl derartiger Bildpunkte zusammensetzt, zu minimieren. Über die Zuleitung cellsel_, die mit einer Ansteuerungsschaltung am Rande des Sensorarrays verbunden ist, wird die Schaltung eines jeden Bildpunkt aktiviert. s1out ist die Netzbezeichnung für den Ausgang des ersten Verstärkers, s1_pow und s2_pow sind die Knoten, die jeweils an der erste Hauptelektrode der beiden als Schalter eingesetzten Transistoren MS1 und MS2 angeschlossen sind. Diese beiden Knoten stellen damit die geschaltete Versorgungsspannung der beiden Verstärkerstufen dar.

## Patentansprüche

1. Schaltungsanordnung zum schnellen Auslesen einer Bildzelle für einen Bildaufnehmer-Chip mit einer Vielzahl derartiger in Form eines zweidimensionalen Arrays angeordneter Bildzellen und mit einer Ausleselogik, die zur Abbildung einer hohen Eingangssignaldynamik auf eine reduzierte Ausgangssignaldynamik ausgelegt ist, wobei das lichtempfindliche Element der Bildzelle mit der einen Hauptelektrode eines ersten MOS-Transistors (M0) und mit dem Gate eines zweiten MOS-Transistors (M1) so verbunden ist, daß das Gate und die andere Hauptelektrode des ersten MOS-Transistors (M0) kurzgeschlossen sind und auf ein festes Potential (Vₛₛ) gelegt sind, so daß sich für die Übertragungscharakteristik Lichtstärke zu Ausgangsspannung (an einem Knoten s1out) des zweiten MOS-Transistors (M1) eine logarithmische Kennlinie ergibt, und daß die erste Hauptelektrode des zweiten MOS-Transistors (M1) ebenfalls auf dem gemeinsamen Potential (Vₛₛ) liegt und daß an der zweiten Hauptelektrode des zweiten MOS-Transistors (M1) ein Ausgangssignalverstärker angeschlossen ist,
**dadurch gekennzeichnet, daß** ein zum ersten MOS-Transistor (M0) parallel geschalteter weiterer MOS-Transistor (Mr1) des gleichen Ladungsträgertyps geschaltet ist, dessen eine Hauptelektrode mit der einen Hauptelektrode des ersten MOS-Transistprs (M0) und dessen andere Hauptelektrode mit der anderen Hauptelektrode des ersten MOS-Transistors (M0) kurzgeschlossen sind, und daß an die Gate-Elektrode des weiteren MOS-Transistors (Mr1) ein Reset-Spannungspuls anlegbar ist, mit dem der MOS-Transistor (Mr1) in einen Arbeitspunkt mit verringertem Source-Drain-Innenwiderstand gebracht werden kann und damit ein Netzknoten (phi_def) an der ersten Hauptelektrode des ersten MOS-Transistors (M0) beschleunigt entladen werden kann.

2. Schaltungsanordnung nach Anspruch 1,
**dadurch gekennzeichnet, daß** zeitlich nach dem Auslesevorgang der Bildzelle ein in Bezug auf das feste Potential (Vₛₛ) negativer Reset-Spannungspuls am Gate des weiteren MOS-Transistors (Mr1) anlegbar ist.

3. Schaltungsanordnung nach Anspruch 1 oder 2,
**dadurch gekennzeichnet, daß** der weitere MOS-Transistor (Mr1) in Sperrstellung den ersten MOS-Transistor (M0) nicht beeinflußt.

4. Schaltungsanordnung nach einem der Ansprüche 1 bis 3,
**dadurch gekennzeichnet, daß** geschaltete Kapazitäten vorgesehen sind, die den Reset-Spannungspuls erzeugen.

5. Schaltungsanordnung nach Anspruch 4,
**dadurch gekennzeichnet, daß** zur Ansteuerung diskreter Bildzellen-Zeilen eine Dekoderschaltung vorgesehen ist, die die geschalteten Kapazitäten aufweist.

6. Verfahren zum schnellen Auslesen einer Bildzelle in einen Bildaufnehmer-Chip mit einer Vielzahl derartiger Bildzellen unter Verwendung der Schaltungsanordnung nach einem der Ansprüche 1 bis 5, wobei zeitlich nach dem Auslesevorgang eine Resetphase folgt, in der an das Gate des weiteren MOS-Transistors (Mr1) ein Reset-Spannungspuls angelegt wird, der außerhalb der Versorgungsspannung des Transistors liegt und einen Arbeitspunkt gewährleistet, der außerhalb des weak-inversion-Bereichs liegt.

7. Verfahren nach Anspruch 6, wobei durch das Anlegen des Reset-Spannungspulses der weitere MOS-Transistor (Mr1) eine höhere Leitfähigkeit erhält, als der erste MOS-Transistor (M0).

8. Verfahren nach Anspruch 6 oder 7, wobei die zeitliche Abfolge von Auslesevorgang und Rücksetzvorgang einer Bildzelle von einer Zeilendekoderschaltung gesteuert wird und dadurch eine zeitlich feste Kopplung erfährt.

## Claims

1. Circuit for rapid read-out of an image cell for a video recording chip including a plurality of such image cells disposed in a two-dimensional array as well as a read-out logic system designed for imaging a high input signal dynamic onto a reduced output signal dynamic, wherein the photosensitive element of said image cell is connected to the first main electrode of a first MOS transistor (M0) and to the gate of a second MOS transistor (M1) in such a way that said gate and the other main electrode of said first MOS transistor (M0) are shorted and set to a fixed potential (Vₛₛ) such that a logarithmic characteristic is achieved for the transmission characteristic light intensity vs. output voltage (at a node s1out) of said second MOS transistor (M1), and that said first main electrode of said second MOS transistor (M1) is equally set to the common potential (Vₛₛ) and that an output signal amplifier is connected to the second main electrode of said second MOS transistor (M1),
**characterised in that** a further MOS transistor (Mr1) of the same charge carrier type is connected in parallel with said first MOS transistor (M0), whose first main electrode is shorted with the first main electrode of said first MOS transistor (M0) while its other main electrode is shorted to the other main electrode of said first MOS transistor (M0), and that a reset voltage pulse can be applied to the gate electrode of said further MOS transistor (Mr1), by which said MOS transistor (Mr1) can be set to a working point of reduced source-drain internal resistance so that a network node (phi_def) on said first main electrode of said first MOS transistor (M0) can be discharged at an accelerated rate.

2. Circuit according to Claim 1,
**characterised in that** a resetting voltage pulse negative relative to said fixed potential (Vₛₛ) can be applied to the gate of said further MOS transistor (Mr1) after the image cell read-out cycle.

3. Circuit according to Claim 1 or 2,
**characterised in that** said further MOS transistor (MR1) in inhibited condition does not take an influence on said first MOS transistor (M0).

4. Circuit according to any of the Claims 1 to 3,
**characterised in that** connected capacitors are provided for generating said resetting voltage pulse.

5. Circuit according to Claim 4,
**characterised in that** a decoder circuit is provided for controlling discrete image cell lines, which comprises said connected capacitors.

6. Method for rapid read-out of an image cell in a video recording chip comprising a plurality of such image cells, operating on the circuit according to any of the Claims 1 to 5, wherein a reset phase follows, in terms of time, the read-out cycle, in which phase a reset voltage pulse is applied to the gate of said further MOS transistor (Mr1), which reset pulse is outside the range of the supply voltage of the transistor and induces the setting of a working point beyond the weak-inversion range.

7. Method according to Claim 6,
**characterised in that** said further MOS transistor (Mr1) is provided with a higher conductivity than said first MOS transistor (M0) by applying said reset voltage pulse.

8. Method according to Claim 6 or 7, wherein the succession in time of the read-out cycle and the phase of resetting an image cell is controlled by a line decoder circuit and is thus coupled in a fixed relationship in time.

## Revendications

1. Circuit pour la lecture rapide d'une cellule vidéo pour une microplaquette d'enregistrement vidéo comprenant une pluralité de telles cellules vidéo disposées dans une matrice bidimensionnelle, ainsi qu'une logique de lecture conçue de faire l'image d'une haute dynamique de signal d'entrée sur une dynamique réduite de signal de sortie, dans lequel l'élément photosensible de ladite cellule vidéo est relié à la première électrode principale d'un premier transistor M.O.S. (M0) et à la grille d'un deuxième transistor M.O.S. (M1) de façon, que ladite grille et l'autre électrode principale dudit premier transistor M.O.S. (M0) sont court-circuitées et réglées à un potentiel fixe (Vₛₛ) de façon à achever une caractéristique logarithmique pour la caractéristique de transmission "intensité des lumière/tension de sortie" (à un noeud s1out) dudit deuxième transistor M.O.S. (M1), et de manière, que ladite première électrode principale dudit deuxième transistor M.O.S. (M1) soit également réglée au potentiel commun (Vₛₛ) et qu'un amplificateur du signal de sortie est relié à la deuxième électrode principale dudit deuxième transistor M.O.S. (M1),
**caractérisé en ce qu'**un transistor M.O.S. additionnel (Mr1) du même type des porteurs de charge est relié en parallèle audit premier transistor M.O.S. (M0), dont la première électrode principale est court-circuitée avec la première électrode principale dudit premier transistor M.O.S. (M0) pendant que son autre électrode principale est court-circuitée à l'autre électrode principal dudit premier transistor M.O.S. (M0), et **en ce qu'**une impulsion de tension de remise est applicable à l'électrode de grille dudit transistor M.O.S. additionnel (Mr1), moyennant laquelle on peut remettre ledit transistor M.O.S. (Mr1) à un point de travail à résistance intérieure source-drain réduite de façon à permettre le déchargement d'un noeud de réseau (phi_def) sur ladite première électrode principale dudit premier transistor M.O.S. (M0) à une vitesse accélérée.

2. Circuit selon la revendication 1,
**caractérisé en ce qu'**une impulsion de tension de remise négative par rapport audit potentiel fixe (Vₛₛ) est applicable à la grille dudit transistor M.O.S. additionnel (Mr1) suivant le cycle de lecture de la cellule vidéo.

3. Circuit selon la revendication 1 ou 2,
**caractérisé en ce que** ledit transistor M.O.S. additionnel (MR1) en état bloqué ne prend pas de l'influence sur ledit premier transistor M.O.S. (M0).

4. Circuit selon une quelconque des revendications 1 à 3,
**caractérisé en ce que** des condensateurs reliés sont disposés afin d'engendrer ladite impulsion de tension de remise.

5. Circuit selon la revendication 4,
**caractérisé en ce qu'**un circuit décodeur est disposé afin de commander des lignes discrètes dans la cellule vidéo, qui comprend lesdits condensateurs reliés.

6. Procédé de lecture rapide d'une cellule vidéo dans une microplaquette d'enregistrement vidéo comprenant une pluralité de telles cellules vidéo, qui fonctionne à la base du circuit selon une quelconque des revendications 1 à 5, dans lequel une phase de remise suit, dans le temps, le cycle de lecture, dans laquelle phase une impulsion de tension de remise est appliquée à la grille dudit transistor M.O.S. additionnel (Mr1), cette impulsion de remise étant en dehors de la gamme de la tension d'alimentation du transistor et induisant le réglage d'un point de travail en dehors de la gamme à inversion faible.

7. Procédé selon la revendication 6,
**caractérisé en ce que** la conductibilité dudit transistor M.O.S. additionnel (Mr1) est plus haute que celle dudit premier transistor M.O.S. (M0) grâce à l'application de ladite impulsion de tension de remise.

8. Procédé selon la revendication 6 ou 7, dans lequel l'ordre chronologique du cycle de lecture et de la phase de remise d'une cellule vidéo est commandé par un circuit décodeur de lignes, en étant ainsi couplé en un rapport chronologique fixe.
